(19)

**Europäisches Patentamt**
**European Patent Office**
**Office européen des brevets**

(11) **EP 1 973 046 A1**

(12) **EUROPEAN PATENT APPLICATION**

(43) Date of publication:
**24.09.2008 Bulletin 2008/39**

(51) Int Cl.:
***G06F 17/30*** (2006.01)

(21) Application number: **07251244.5**

(22) Date of filing: **23.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **British Telecommunications Public Limited Company London EC1A 7AJ (GB)**

(72) Inventor: **The designation of the inventor has not yet been filed**

(74) Representative: **Lidbetter, Timothy Guy Edwin BT Group Legal Intellectual Property Department PP C5A BT Centre 81 Newgate Street London EC1A 7AJ (GB)**

(54) **Indexing presentation slides**

(57)     A method for indexing a collection of presentation files 5 for use in a subsequent search and/or browsing operation is disclosed, the presentation files comprising a plurality of slides for display in a presentation program and being stored in one or more folders of a hierarchical file structure. The method comprises: (a) traversing at least part of the hierarchical file structure to identify the presentation files; (b) from each identified presentation file, extracting the slides and converting each slide to an image format; (c) for each converted slide image, extracting data representing one or more image features; and (d) storing the extracted data as index data in relation to the corresponding slide image to enable subsequent identification of slides having same or similar image feature(s) to that specified in query data.

Figure 3

EP 1 973 046 A1

**Description**

The present invention relates to a method and system for indexing presentation slides, particularly for use in a subsequent browsing and/or search operation.

The use of presentation software to create and display presentation slides is common, particularly in business and educational environments. A well known presentation application is Microsoft Powerpoint™, although many others such as Apple Keynote™ and Lotus Freelance Graphics™ are popular. These applications enable the creation of presentations comprising a series of slides, each of which can contain objects such as text, images, graphics, charts, diagrams, tables and even video clips. In this way, the author can create a presentation that is visually distinctive and appealing, thus aiding the presenter's ability to capture and retain audience attention.

Over time, an organisation will likely deliver a large number of presentations and so generate many hundreds, if not thousands, of slides. These presentations represent a valuable asset of the organisation. In many cases, the content of slides in different presentations will be similar, if not related, and so it is common for users to browse/search through existing presentations with a view to reusing content. For example, a user may wish to include a graphics object in their presentation having a particular shape. This reuse not only saves time but enables people in an organisation to convey a consistent image and/or message in terms of semantic content, i.e. what is said on the slides, and visual appearance, i.e. the look and feel of the slides.

It would be desirable to provide a method and system for managing existing presentation assets in such a way that effective indexing, browsing and searching can be performed to locate slide(s) having particular characteristics, for example in terms of similar semantic and visual content.

Existing methods generally involve managing presentation files for manipulation and creation using out-of-slide annotation text or attributes. There is little discussion on how these can be effectively used for realising effective cross-presentation browsing and search functions.

In "iBase: Navigating Digital Library Collections" by Browne, Rüger, Xu and Heesch, International Conference on Image and Video Retrieval, CIVR, Tempe, Arizona, July 2006, LNCS 4071, pp 510-513, Springer, 2006, there is disclosed a method for indexing, browsing and searching an image collection.

In one sense, the invention relates to a method for indexing a collection of different presentation files for use in a subsequent search and/or browsing operation, the presentation files being stored in a hierarchical file structure and each comprising a plurality of slides, the method comprising: extracting slides from each presentation file; converting each slide into an image format; for each converted slide image, extracting data representing one or more image appearance features; and storing said extracted appearance feature data as index data in relation to its corresponding slide for use in a subsequent search and/or browse operation.

According to a first aspect of the invention, there is provided a method for indexing a collection of presentation files for use in a subsequent search and/or browsing operation, the presentation files comprising a plurality of slides for display in a presentation program and being stored in one or more folders of a hierarchical file structure, wherein the method comprises: (a) traversing at least part of the hierarchical file structure to identify the presentation files; (b) from each identified presentation file, extracting the slides and converting each slide to an image format; (c) for each converted slide image, extracting data representing one or more image features; and (d) storing the extracted data as index data in relation to the corresponding slide image to enable subsequent identification of slides having same or similar image feature(s) to that specified in query data.

The invention provides a way of indexing a large collection of presentation files stored in a hierarchical file structure, such as that provided in MS Windows Explorer™ whereby files are stored in folders or subfolders each of which can contain zero, one or more files or indeed further subfolders. By traversing at least part of the file structure, for example by searching the folders in a predetermined order, we identify all presentation files that have been stored in the searched part of the structure and then proceed to extract constituent slides which are converted to image format for feature extraction and indexing. In this way, we can generate and store index data in relation to a very large collection of presentations regardless of where in the traversed part of the structure they are stored by the creator. By automating collation of index data characterizing the multitude of slides, content based browsing and/or searching can be performed.

Step (c) may further comprise extracting data representing one or more image features in respect of (i) the overall image and (ii) a subsection of the image representing an object identified in the slide. The method may also comprise, for each extracted slide in (b), identifying textual data indicative of the or each word appearing in said slide and/or annotation text associated with each slide, said textual data being stored as a set of text index data in relation to corresponding slides thereby to enable subsequent identification of slides having same or similar image feature(s) and text content as specified in query data. The extracted data may be compared with that extracted for other slides to provide, for each slide pairing, a similarity measure quantifying the degree of similarity between the slides in terms of the or each image feature and/or text, the similarity measure being stored as a further set of index data.

According to a second aspect of the invention, there is provided a method for indexing a collection of presentation files for use in a subsequent search and/or browsing operation, the presentation files comprising a plurality of slides for display in a presentation program and being stored in one or more folders of a hierarchical file structure, wherein the method comprises: (a) traversing at least part of the hierarchical file structure to identify the presentation files; (b) extracting, from each identified file, its constituent slides and converting them to an image format; (c) for each slide image (i) extracting data quantifying one or more image appearance features; (ii) extracting data indicative of one or more objects located therein; (iii) comparing said extracted data with that extracted for other slides to provide, for each slide pairing, a similarity measure quantifying of the degree of similarity between the slides in terms of the or each appearance feature and object; and (d) storing, in respect of each slide, index data indicative of the similarity measures.

In quantifying similarity in terms of both one or more image appearance feature(s) and object(s), it is possible to generate a similarity measure of each combination of slide pairs that can be effectively used in a subsequent browse/ search operation.

Image appearance features are characteristics of the slide when analysed as an image rather than, for example, a PowerPoint™ slide. Examples of image appearance features include colours and texture. This is in contrast to 'objects' which are entities that can be inserted into a slide by a user and which have their own attributes such as object_name, colour, shape, texture, size and so on. Examples of objects commonly used in PowerPoint™ include text, arrows, shapes, charts, video clips etc.

The method may further comprise generating, for each slide pairing, a combined similarity measure based on a combination of similarity measures for the or each appearance feature(s) and object(s). The method may further comprise identifying, in respect of each slide, a subset of slide pairings having one or more similarity measures, or a combined similarity measure, that meets a predetermined criterion. The subset of slide pairings so identified may be the n most similar slide pairings as determined by their respective combined similarity measures.

Step (a)(ii) may comprise extracting data indicative of one or more word objects, the similarity measure provided in respect of the or each word object quantifying the number of word matches between the slide pairings.

According to a second aspect of the invention, there is provided a method for browsing a slide collection comprising a plurality of slides indexed in accordance with the above indexing method, the browsing method comprising: (a) selecting a slide in the collection; (b) accessing index data stored in respect of the selected slide; and (c) displaying on a display means, in accordance with the accessed index data, a subset of the other slides identified as being most similar to the selected slide in terms of the or each appearance feature and object.

Preferably, the other slides are displayed in such a position on the display means as to reflect their respective degree of similarity with respect to the selected slide.

According to a third aspect of the invention, there is provided a method for searching a slide collection comprising a plurality of slides indexed in accordance with the above indexing method, the method comprising: (a) providing search criteria specifying an appearance feature and object; (b) identifying a plurality of slides having either one of the criteria; and (c) for each identified slide, accessing a subset of other slides identified as being most similar to the selected slide in terms of the or each appearance feature and object.

The invention will now be described, by way of example, with reference to the accompanying drawings, in which:

Figure 1 is a schematic block diagram of a computer network to which is connected a presentation management server and a plurality of user terminals;

Figure 2 shows a typical presentation slide, extracted from a presentation file, and from which text has been extracted;

Figure 3 is a schematic diagram indicating the process of extracting and indexing image and object features from a collection of slides;

Figure 4a is a flow diagram indicating steps of an indexing process according to the invention;

Figure 4b is a screen shot of a file structure generated by the indexing process.

Figure 4c is a screen shot showing the contents of an image reference file created as part of the indexing process;

Figure 5 is a schematic block diagram showing the server-client relationship between the management server and user terminals.

Figure 6 is a screen shot generated by a client application enabling the browsing of slides indexed at the management server; and

Figure 7 is a screen shot generated by a client application enabling the searching of slides indexed at the management server.

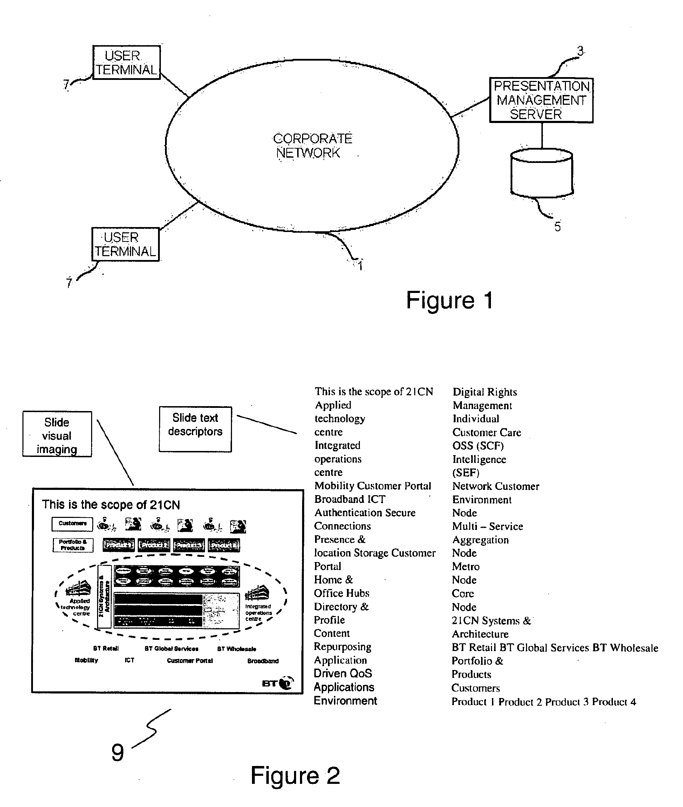

Referring to Figure 1, there is shown a corporate network 1 to which members of an organisation have access. Also connected to the network 1 is a presentation management server (hereafter referred to as the management server) 3 which handles the indexing of all presentation files stored in a repository 5, the latter being a network storage facility onto which members of the organisation can store files, for example word processing documents, images and presentation files. The repository 5 employs an operating system having a file management system which enables users to store files in folders or subfolders of a hierarchical file structure. MS Windows™ Explorer is an example file management system of this type. Users may choose to store their presentation files in existing folders or subfolders or to create new folders and name them appropriately.

Users access the management server 3 via a client application running on their user terminal 7, the client being arranged to access indexed data associated with presentations identified in the file management system and to perform browsing and/or searching functions enabling quick and easy access to individual slides, or a set of slides, determined to be of interest to the users. Access to the management server 3 may also be enabled to external users, e.g. via the Internet, having appropriate security access.

In overview, the operation of the management server 3 provides a new approach to presentation file management and indexing. The concept provides flexible and versatile browsing and searching capabilities at the client end to a large collection of presentations (comprising, potentially, many thousands of slides) based on appearance and semantic/content features. Considering the increasing importance of visual appearance and rich content commonly employed in slides to convey understanding, we derive multiple data representations for each slide. These representations include the overall appearance of a slide, i.e. when considered as an image, and objects such as text, graphics, charts etc. placed within slides during the creation process.

Figure 2 shows a relatively simple presentation slide 9 having a particular overall appearance, as well as objects such as text. The collection of words and phrases comprising the text within a slide , as well as any text attached to a slide, is treated as a semantic descriptor, or metadata, explaining the content of that slide, i.e. the message a presenter intends to convey to his/her audience. Graphical objects may also be included for visualization purposes. Other objects can include boxes, arrows, ovals, images and logos. As mentioned previously, objects are defined as entities that can be inserted into a slide by a user and which have their own attributes such as object_name, colour, shape, texture, size and so on.

Detailed operation of the client and management server 3 will now be described. For ease of explanation, we shall assume that presentations are generated using Microsoft Powerpoint™ although the concept is applicable to presentation files generated using other presentation applications.

As mentioned previously, the repository 5 stores original Powerpoint™ files in a traditional hierarchical and "themed" file folder structure, such as that used by MS Microsoft Explorer™. In practice, the files may be located in many different folders and subfolders across the hierarchy. In an initial stage, therefore, at least part of the file management system is traversed to locate all Powerpoint files, preferably by searching each folder and subfolder in a predetermined order. Once all Powerpoint files have been located, the same file folder structure is duplicated in the management server 3, but this time each presentation file is replaced with a subfolder of the same root name. Slide images are extracted from each presentation file in order of appearance in the presentation and then converted to image format; the resulting high resolution images (e.g. 1040 x 720 pixels) are stored in the respective subfolders. A number of indexing operations are performed on the slide images to index extracted features and so-called similarity metrics in respect of different slide pairings. The similarity metrics reflect the degree to which different pairs of slides are similar in terms of appearance and object features. This indexing is preferably performed off-line and only needs to be performed once. When new presentations are added, the indexing stage can be repeated. The management server 5 runs a Java servlet such as Apache Tomcat. Upon running the servlet, the server 5 will load folders from the repository 5 in accordance with its existing hierarchical format.

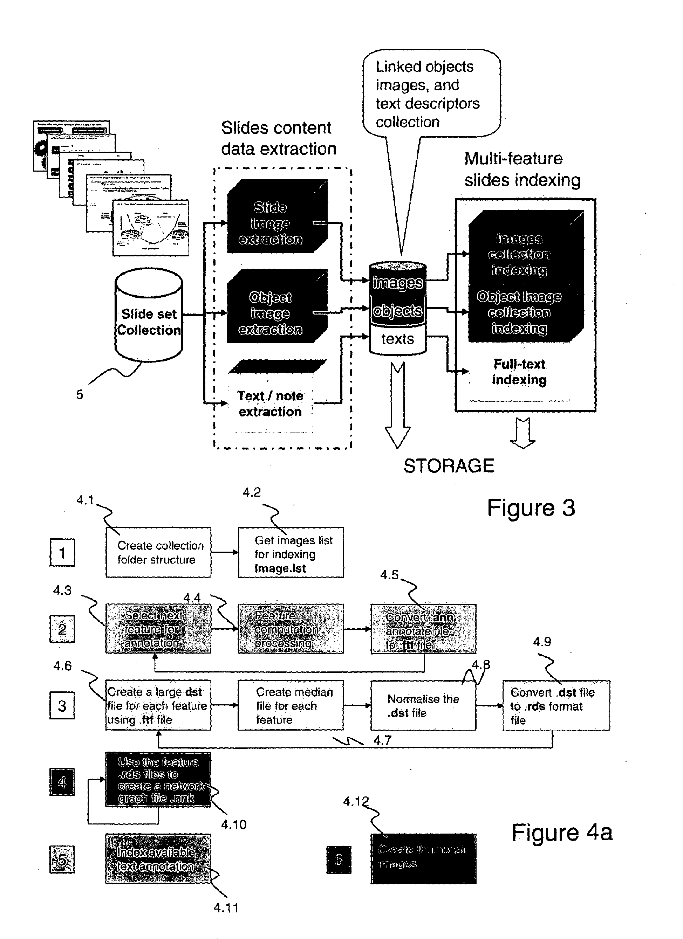

The indexing process is shown schematically in Figure 3. Each slide is considered to be made up of a plurality of different content types, in this case three types, namely (a) slide appearance, (b) text and (c) other objects such as charts, graphics, videos etc. Features of these content types are extracted, indexed and similarity metrics computed between them to identify slides having similar content in terms of each content type, the similarity metrics forming an additional set of index data. The index data is linked to its associated image, text or object which can be retrieved in the event that the index data is browsed or searched for at the client end.

The indexing process will now be described in detail with reference to Figures 4a-4c which indicate the main indexing steps and file management functions.

Initial Indexing Steps

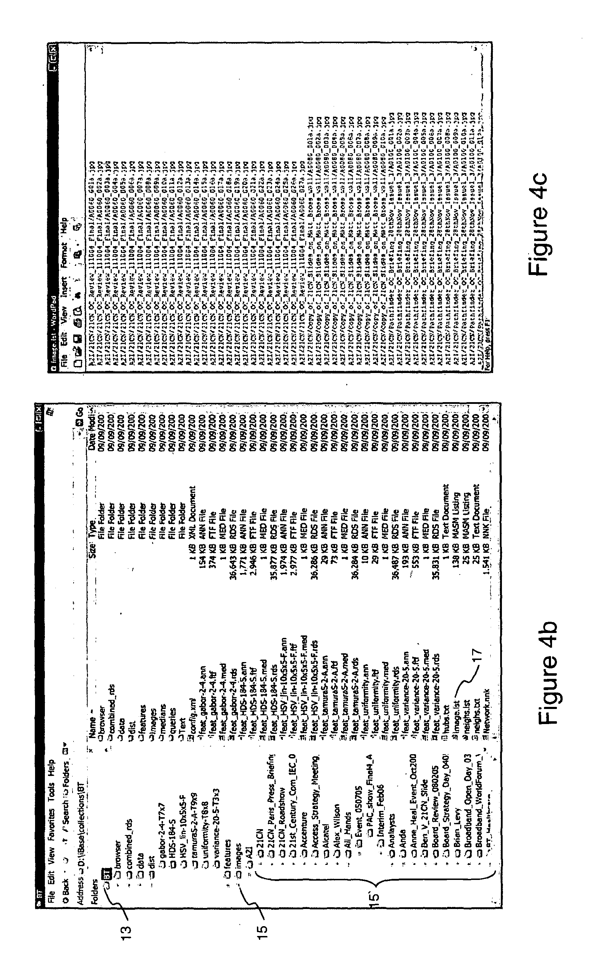

Referring to Figures 4a and 4b, in a first step 4.1, the management server 3 traverses the hierarchical file structure in the repository 5 and creates a collection folder. The collection folder contains a number of subfolders, the purpose of which will become clear. The main collection folder 13 is called 'BT' which happens to be the name of the organisation concerned. One of BT's subfolders, called 'images' 15, is a duplicate of the traversed file hierarchy and indicates in which folders and subfolders Powerpoint files were identified. However, in place of each identified Powerpoint file is provided a further subfolder having the same root name. The subfolder stores image files for each slide in the relevant presentation, in this case JPEG images which are converted from the original slide format.

In a second step 4.2, a special file called 'image.lst' 17 is generated which lists all images stored in the 'images' subfolder 15. The contents of image.lst 17 are shown in Figure 4c. It will be seen that the image.lst file 17 provides a sort of index by which other indexing parameters can be referenced back to the relevant JPEG image.

Extraction of Appearance Features

The next stages in the indexing process 4.3 - 4.5 extract appearance features from each of the JPEG images stored in the 'images' subfolder 15. In this case, we choose to extract six known features introduced below. The computation of each feature is known in the art and a detailed understanding is not considered essential to understanding the invention.

1) Gabor-2-4

The gabor feature is computed by filtering the image with a bank of orientation and scale sensitive filters, or by performing gabor wavelet transform, and computing the mean and standard deviation of the output in the frequency domain. Full details can be found in "Texture Features and Learning Similarity" by Manjunath and Ma [1996] in Proceedings of the 1996 Conference on Computer Vision and Pattern Recognition (CVPR '96). The reference to 'gabor-2-4' means using 2 scales and 4 orientations.

2) Tamura S-2-A

In the paper "Textural features corresponding to visual perception" by Tamura et al, IEEE Transactions on Systems, Man and Cybernetics, 8(6), 460-472 texture features are derived that correspond to human visual perception. These have since been termed "tamura texture features". There are six possible features, but three are used here, namely coarseness, contrast and directionality, as they have proven to be very effective. Detailed computations can be found in "Evaluation of texture features for content-based image retrieva" by Howarth & Rueger, International Conference on Image and Video Retrieval, Dublin, Ireland, 2004.

3) HDS-184-S

The HDS feature captures local colour image structure, see for example: B.S. Manjunath, J.R. Ohm, "Color and texture descriptors." IEEE Trans. on Circuits and Systems for Video Technology, Vol.11 (2001) pp. 703-715. It is defined in the HMMD (hue, min, max, diff) colour space. This is used in the MPEG-7 standard and is derived from both RGB and HSV spaces. The hue component is taken from HSV and the min and max components are taken from the maximum and minimum values in the RGB space. The diff component is the difference between min and max. We follow the MPEG-7 standard and quantise this space non-uniformly into 184 bins in the 3-dimensional hue, diff and sum (HDS) colour space. To calculate the colour structure descriptor an 8x8 window is passed over the image. Each of the 184 bins of the HDS histogram contains a number of window positions for which there is at least one pixel falling into the bin under consideration. This feature, which we call HDS-S, is capable of discriminating between images with the same global colour distribution but differing local colour structures. For this reason, it is suited, for example, to colour medical images which tend to have similar overall colour distribution but differing structure depending on the detail of the photograph.

4) HSV_lin-10x5x5-F

A 3D colour histogram computed in HSV colour space.

5) Uniformity

This feature generates a float value between 0.01 and 1 and measures the uniformity of a grey level image, in this case when converted from colour. One first computes the histogram of this image, say using N=100 bins, i=1 ... N. It is then normalised by the size of the image to obtain $h_i$. Finally, we sum to find the uniformity:

$$\text{uniformity} = \sum_{i=1}^{N} h_i^2$$

6) Variance-N-T, e.g. 20-5

The feature is obtained by first computing the standard deviation within a TxT sliding window (e.g. *T=5*) for each pixel of a grey-level image, which gives rise to a 'standard deviation' image, from which a histogram of *N* bins (e.g., *N=20*) is generated, normalised and output as a feature vector.

We extract each of the six features for each image, giving rise to the six so-called .ann files as shown in Figure 4b. Optionally, each .ann file can be converted to ASCII format for ease of viewing, in which case the six .ann files are renamed as .ftf files. Each file contains numerical values representing respective feature vectors, with each row relating values to images listed in the 'image.lst' file 17, e.g. so that the second feature vector in feat_gabor.ftf is the gabor value for A21/21CN....../A0060_002a.jpg.

Calculation of Similarity Metrics

In the next steps 4.6 - 4.9, a similarity metric is used to generate a distance value representative of similarity between the JPEG images representing the slides. This is performed by comparing the feature vectors in a given .ftf file. So, for a given .ftf file, the first feature vector is compared with itself (resulting in zero distance), the second feature vector, the third feature vector, and so on for all feature vectors. The result is a first row of values representing the similarity between the first image and each other image pairing. The process is repeated for the second feature vector on the second row and so on until similarity metrics between each image pairing are generated for the particular feature, e.g.

| 1-1 | 1-2 | 1-3 | 1-4 | 1-5...... | 1-N |
|-----|-----|-----|-----|-----------|-----|
| 2-1 | 2-2 | 2-3 | 2-4 | 2-5...... | 2-N |
| 3-1 | etc. | | | | |
| N-N | | | | | |

The distance values for each of the six features are stored in respective .dst files. Next, to reduce the values to a manageable quantity, the median distance value for each .dst file is calculated and the distance values normalised. Finally, from each of the six normalised .dst files, new .rds files are created which store, against each image in the collection, the index number and distance values of the most similar 1024 images. As an example, lines of an exemplary .rds are shown below. Here, we assume that the presentation repository 5 stores 2464 slides, 0 being the index of the first slide and 2463 being the index of the last slide.

**0** 0.0 12 0.010430463 936 0.01474201 948 0.018977348 944 0.021245627 19 0.022860644 7 0.025078116 26 0.08870612 ... (*1024 pairs in total*)

1 0.0 937 0.054866996 936 0.12326747 25 0.12968035 0 0.13369794 944 0:13465606 12 0.13679005 13 0.14727497 7 0.14756893 ... (*1024 pairs in total*)

....

**2463** 0.0 2462 0.09024052 2461 0.09294487 2248 0.21905242 2250 0.23025945 1080 0.4114919 322 0.42016944 1891 0.4203794 ... (*1024 pairs in total*)

The first row indicates that the most similar slide to slide 0 (in terms of this particular feature) is slide 12 (image.lst indicates this to be A2I/21CN......./A0060_013a.jpg) which has the lowest distance. The next most similar slides, in order, are 936, 948, 944, 19, 7, 26 and so on.

Note that this process is repeated for each of the six .ftf feature files used in this indexing process.

Generating the Nearest Neighbour Network File

In the next step 4.10, all six .dst files are combined to generate a network of connected images, that is a network identifying the similarity relationships between the different slide images. For a given slide, we identify the most similar other slides in terms of the combined appearance features, or rather the combined distance values stored in each of the six .dst files in respect of the given slide. It is possible for a slide to have in excess of ten closely matching neighbours. The result of the combination of distance values for all slides is a so-called nearest neighbour network which is stored as a .nnk file. The record order in the .nnk file corresponds with that used in the 'image.Ist' file with each slide's nearest neighbours being indicated thereafter, separated by a # character. The following is example of output generated in respect of the first slide.

A21\21CN\21CN_OC_Review_111004_Final\A0060_001a #936 0.8492063 0.14252336 0.12850468 0.19626169 0.18457943 0.19158879 0.15654206#944 0.04761905 0.16666667 0.6666667 0.0 0.16666667 0.0 0.0#948 0.04761905 0.125 0.375 0.0 0.0 0.0 0.5#12 0.03968254 0.8 0.05 0.0 0.05 0.05 0.05#2238 0.007936508 0.0 0.0 0.0 0.0 0.0 1.0#7 0.007936508 0.0 0.75 0.0 0.0 0.25 0.0#

where the slide filename is A2I\21 CN\21 CN_OC_Review_111 004_Final\A0060_001 a.jpg'. This slide has six closely matching slide neighbours which are numbered #936, #944, #948, #12, #2238, and #7, #936 being the most similar, #944 the next most similar and so on. The value following each slide number (i.e. 0.8492063, 0.04761905, etc.) indicates the distance/deviation value for that slide, each value for the six slides adding up to one. The six values following the distance/deviation value (i.e. 0.14252336, 0.12850468, etc.) for each slide indicate the percentage contribution made by each of the six appearance features.

Text Indexing

In a further step 4.11, a text index is generated for all slides. That is, each text object identified in the slides is extracted and the individual words indexed in association with the relevant slides. This indexing can be performed by Apache Lucene software which is a high-performance, full-feature text search engine library written in Java. It is found to be suitable for most applications that require a full text search. For further information see http://lucene.apache.org/iava/docs/.

The text index for each slide preferably adopts the same filename format as the relevant slide image, e.g. the file A2I\21CN\........\A0060_001a.txt will store text extracted from the first slide A2I\21CN\.......\A0060_001 a.jpg.

Finally, in step 4.12, a conversion program is run to generate low resolution thumbnail-type images of each slide image listed in the 'image.Ist' file 17. These enable client applications to present an image of selected slides and similar slides on an intuitive graphical user interface (GUI) such that users can immediately see slide content and similarity relationships in a visual representation.

Other Object Indexing

Other objects such as graphics, charts, arrows, shapes etc. can also be indexed against each slide by creating a file (in correspondence to each slide) listing object attributes such as object_name and object_type. In the present embodiment, however, we shall assume the presence of text objects only.

Final Indexing

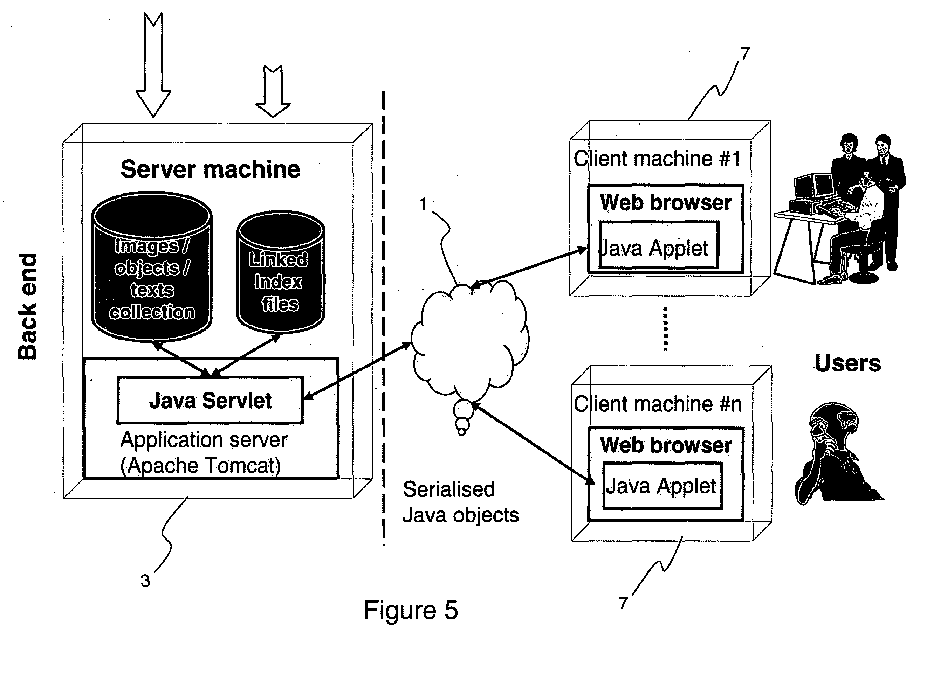

As indicated in Figure 5, the .nnk and .txt files so generated are stored as the index files in the management server 3 and are linked to the corresponding JPEG images and text objects. The extracted appearance feature data is also stored as index data.

The indexing steps are preferably performed automatically by a dedicated indexing application. All that a user need do is identify the file management system, or part thereof, that is to be traversed and the application performs steps 4.1-4.12 without further human intervention. The application may be run periodically to account for updates, i.e. new presentation files being filed in the repository 5 or modifications made to existing presentation files.

Browsing and Search

The collection folders, thumbnail images, extracted appearance feature data and .nnk and .txt index files enable efficient and convenient browsing and searching of the slide collection from any one of the user terminals 7. As indicated above, each terminal operates a web browser with Java applet arranged to access the data and to display the results of the browsing and search operations in an intuitive and convenient way.

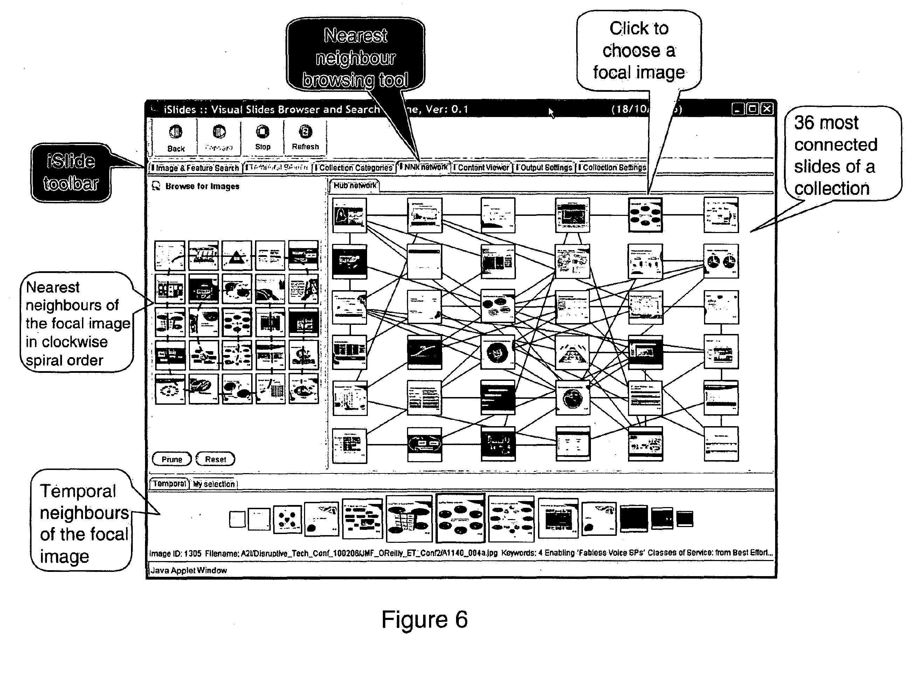

In a browsing operation, for example, the client user is able to browse the presentations and constituent slides, or rather the converted image versions of the slides. In this respect, since the slides are stored as images, it is not necessary for client terminals to have the relevant presentation software, here Powerpoint, to view the slides. Browsing is useful when the user is not entirely sure what they are looking for; for example when the user is looking for a particular style of slide or one having a strong visual impact. Alternatively, the user may have performed a search (to be described below) and then wants to see what other slides are related to the or each slide located in the search. The collection folder generated in the initial indexing step provides one means of navigation, namely traditional hierarchical browsing whereby the user is able to select folders, subfolders and presentations so that constituent slides can be viewed. Figure 6 shows an intuitive GUI for browsing slides in a number of ways. Having opened a particular presentation, the main window 20 of the GUI shows the thirty-six most connected slides within the particular presentation whilst the bottom window 22 shows the slides in temporal order, i.e. the order of display. Selection of a particular slide image will cause that slide to be the 'focus' slide in the centre of the temporal window with slides immediately preceding and following in terms of display order being shown to the left and right of the focus image. Additionally, selection of a slide will cause display of its connected slides from the entire repository 5, this data being retrieved from the .nnk file. The results are shown in the left hand window 24 in Figure 6. Those slides considered most similar to the selected image will be represented as thumbnails in order of similarity. The order is arranged as a clockwise spiral pattern from the central, focus, slide. It will be seen in Figure 6 that the slide positioned beneath the focus slide is very similar, whilst the one directly to the right of this slide is similar but to a lesser extent, and so on.

The searching operation enables a user to locate a slide or slides meeting a specified criterion or criteria. Searching may be appearance, text or other object -based. For example, in text based searching, the user may have in mind a certain word or phrase that should appear in the slide. Where other objects, such as 'chart' or 'arrow' have been indexed, the user may specify that certain object types should be present. Once slides comprising the relevant text, or phrases, are located, subsequent browsing enables user-filtering of the results to locate resulting slides having a suitable appearance. Appearance-based searching involves specifying a particular image, i.e. a query image, for which the same or similar images should be located. The image file may correspond to an existing slide or may be uploaded from the client user's own collection. Upon locating a target slide, the user may then select the text file associated with this slide and perform a text-based search to locate other slides having matching text and phrases.

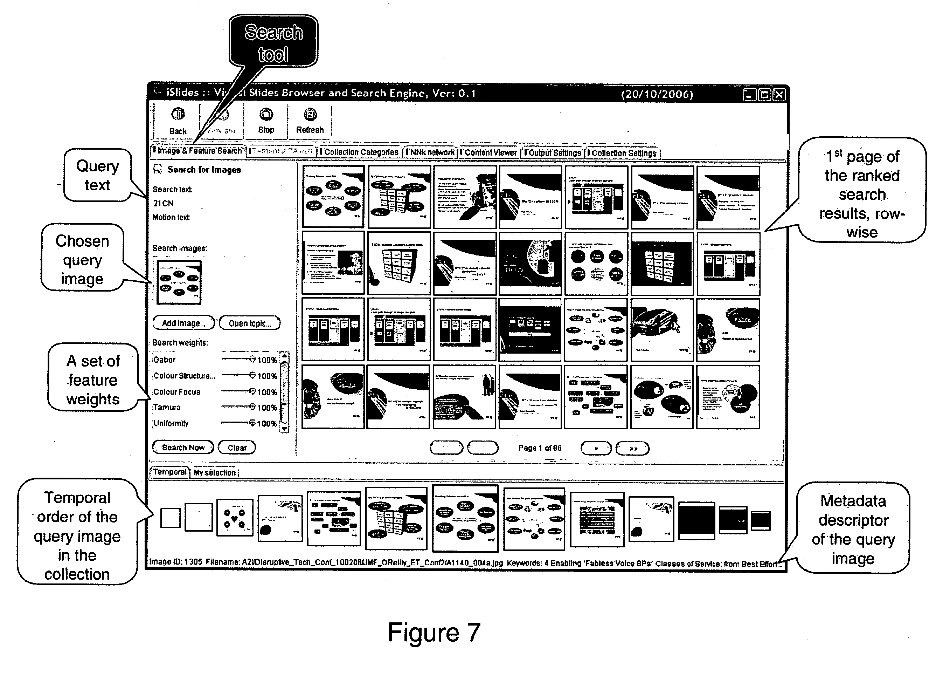

Figure 7 shows a further screen of the above-mentioned GUI which facilitates searching by text and images. It will be noted that it is possible to adjust weightings applied to the different appearance features.

Combined Indexing, Browsing & Searching

As well as enabling searches to be performed using simple criteria, such as text, other objects, and appearance, either alone or in series (in other words by filtering the slide collection in series according to each search criterion) a particularly powerful aspect of the system is to enable searching in response to combined criteria. In this case, the user specifies a query image and another object, such as text. Following selection of the 'search' button a one-pass search generates a set of results comprising those slides which most closely meet the combined criteria. The idea is to treat the text as a new feature in addition to the appearance features. The .rds files of visual features are combined with similarity values of textual features to provide search results with a view to meeting both visual and content requirements.

In summary, the above described concept provides an effective and convenient way for browsing and searching presentation slides. The concept first involves an indexing operation by which an entire collection of presentations are indexed automatically according to their appearance and constituent objects, such as text, and also according to their similarity with other slides in the collection, as determined using a combination of appearance features and/or a combination of appearance and object features. By indexing the slides in this way at a server, clients having access to the server can browse and search slides using a number of possible methods. This can involve simple searching according to criteria, combined searching and also browsing.

The lateral browsing approach offered by the system takes advantage of the similarity connections generated in the indexing stage. The nearest neighbourhood connections form a graph with a small world property with 3-4 degrees of separation. These characteristics, together with a summary of the slides in terms of highly connected entry points, make the slide collection amenable to browsing in a powerful way. Searching involves an integrated combination of traditional queries on meta-data, full-text and similarity -based matching where users can locate objects that are visually similar to any given focus image they select.

**Claims**

1.    A method for indexing a collection of presentation files for use in a subsequent search and/or browsing operation, the presentation files comprising a plurality of slides for display in a presentation program and being stored in one or more folders of a hierarchical file structure, wherein the method comprises: (a) traversing at least part of the hierarchical file structure to identify the presentation files; (b) from each identified presentation file, extracting the slides and converting each slide to an image format; (c) for each converted slide image, extracting data representing one or more image features; and (d) storing the extracted data as index data in relation to the corresponding slide image to enable subsequent identification of slides having same or similar image feature(s) to that specified in query data.

**2.** A method according to claim 1, wherein step (c) comprises extracting data representing one or more image features in respect of (i) the overall image and (ii) a subsection of the image representing an object identified in the slide.

**3.** A method according to claim 1 or claim 2, further comprising, for each extracted slide in (b), identifying textual data indicative of the or each word appearing in said slide and/or annotation text associated with each slide, said textual data being stored as a set of text index data in relation to corresponding slides thereby to enable subsequent identification of slides having same or similar image feature(s) and text content as specified in query data.

**4.** A method according to any preceding claim, further comprising comparing said extracted data with that extracted for other slides to provide, for each slide pairing, a similarity measure quantifying the degree of similarity between the slides in terms of the or each image feature and/or text, the similarity measure being stored as a further set of index data.

**5.** A method for indexing a collection of presentation files for use in a subsequent search and/or browsing operation, the presentation files comprising a plurality of slides for display in a presentation program and being stored in one or more folders of a hierarchical file structure, wherein the method comprises: (a) traversing at least part of the hierarchical file structure to identify the presentation files; (b) extracting, from each identified file, its constituent slides and converting them to an image format; (c) for each slide image (i) extracting data quantifying one or more image appearance features; (ii) extracting data indicative of one or more objects located therein; (iii) comparing said extracted data with that extracted for other slides to provide, for each slide pairing, a similarity measure quantifying of the degree of similarity between the slides in terms of the or each appearance feature and object; and (d) storing, in respect of each slide, index data indicative of the similarity measures.

**6.** A method according to claim 5, further comprising generating, for each slide pairing, a combined similarity measure based on a combination of similarity measures for the or each appearance feature and object.

**7.** A method according to claim 6, further comprising identifying, in respect of each slide, a subset of slide pairings having one or more similarity measures, or a combined similarity measure, that meets a predetermined criteria.

**8.** A method according to claim 7, wherein the subset of slide pairings so identified are the n most similar slide pairings as determined by their respective combined similarity measures.

**9.** A method according to any one of claims 5 to 8, wherein step (a)(ii) comprises extracting data indicative of one or more word objects, the similarity measure provided in respect of the or each word object quantifying the number of word matches between the slide pairings.

**10.** A method for browsing a slide collection comprising a plurality of slides indexed in accordance with any preceding claim, the method comprising: (a) selecting a slide in the collection; (b) accessing index data stored in respect of the selected slide; and (c) displaying on a display means, in accordance with the accessed index data, a subset of the other slides identified as being most similar to the selected slide in terms of the or each appearance feature and/or object.

**11.** A method according to claim 10, wherein the other slides are displayed in such a position on the display means as to reflect their respective degree of similarity with respect to the selected slide.

**12.** A method for searching a slide collection comprising a plurality of slides indexed in accordance with any one of claims 5 to 9, the method comprising: (a) providing search criteria specifying an appearance feature and/or object; and (b) identifying a plurality of slides having either one of the criteria; and (c) for each identified slide, accessing a subset of other slides identified as being most similar to the selected slide in terms of the or each appearance feature and/or object..

**13.** A computer program stored on a computer-readable medium, the computer program comprising instructions operable to cause a processor to perform the steps defined in any preceding claim.

Figure 1

Figure 2

Linked objects
images, and
text descriptors
collection

Slides content
data extraction

Multi-feature
slides indexing

Slide
Image
extraction

Images
collection
indexing

Object
Image
extraction

images

objects

texts

Object Image
collection
indexing

Slide set
Collection

Full-text
indexing

Text / note
extraction

5

STORAGE

**Figure 3**

4.1

Create collection
folder structure

4.2

Get images list
for indexing
**Image.lst**

1

4.3

Select next
feature for
annotation

4.4

Feature
computation
processing

4.5

Convert .ann
annotate file
to .ttf file

2

4.6

Create a large **dst**
file for each feature
using **.ttf** file

Create median
file for each
feature

4.8

Normalise the
**.dst** file

4.9

Convert **.dst** file
to **.rds** format
file

3

4.7

4

Use the feature
.rds files to
create a network
graph file .nnk

4.10

4.12

**Figure 4a**

5

Index available
text annotation

6

Create thumbnail
images

4.11

EP 1 973 046 A1

**Figure 4b**

Window title: BT

File   Edit   View   Favorites   Tools   Help

◯ Back · ◌  · ▾ 🔍 Search ◌ Folders  ▭▾

Address ◌ D:\iBase\collections\BT   ▾ ◻ Go

**Folders**

- 13 — ◌ BT
  - ◌ browser
  - ◌ combined_rds
  - ◌ data
  - ◌ dist
    - ◌ gabor-2-4-T7x7
    - ◌ HDS-184-S
    - ◌ HSV_lin-10x5x5-F
    - ◌ tamuraS-2-A-T9x9
    - ◌ uniformity-T8x8
    - ◌ variance-20-5-T3x3
  - ◌ features
  - ◌ images
  - 15 — ◌ A2I
    - ◌ 21CN
    - ◌ 21CN_Paris_Press_Briefin(
    - ◌ 21CN_Roadshow
    - ◌ 21st_Century_Com_IEC_0
    - ◌ Accenture
    - ◌ Access_Strategy_Meeting
    - ◌ Alcatel
    - ◌ Alex_Wilson
    - ◌ All_Hands
      - ◌ Event_050705
        - ◌ PAC_show_Final4_A
      - ◌ Interim_Feb06
    - ◌ Analaysts
    - ◌ Anda
    - ◌ Anne_Heal_Event_Oct200
    - ◌ Ben_V_21CN_Slide
    - ◌ Board_Review_080205
    - ◌ Board_Strategy_Day_040!
    - ◌ Brian_Levy
    - ◌ Broadband_Open_Day_03
    - ◌ Broadband_WorldForum_\
    - ◌ BT_Healthcare

15' bracket

| Name ▴ | Size | Type | Date Modi |
|---|---|---|---|
| browser | | File Folder | 09/09/200 |
| combined_rds | | File Folder | 09/09/200 |
| data | | File Folder | 09/09/200 |
| dist | | File Folder | 09/09/200 |
| features | | File Folder | 09/09/200 |
| images | | File Folder | 09/09/200 |
| medians | | File Folder | 09/09/200 |
| queries | | File Folder | 09/09/200 |
| Text | | File Folder | 09/09/200 |
| config.xml | 1 KB | XML Document | 09/09/200 |
| feat_gabor-2-4.ann | 154 KB | ANN File | 09/09/200 |
| feat_gabor-2-4.ftf | 374 KB | FTF File | 09/09/200 |
| feat_gabor-2-4.med | 1 KB | MED File | 09/09/200 |
| feat_gabor-2-4.rds | 36,643 KB | RDS File | 09/09/200 |
| feat_HDS-184-S.ann | 1,771 KB | ANN File | 09/09/200 |
| feat_HDS-184-S.ftf | 2,946 KB | FTF File | 09/09/200 |
| feat_HDS-184-S.med | 1 KB | MED File | 09/09/200 |
| feat_HDS-184-S.rds | 35,877 KB | RDS File | 09/09/200 |
| feat_HSV_lin-10x5x5-F.ann | 1,974 KB | ANN File | 09/09/200 |
| feat_HSV_lin-10x5x5-F.ftf | 2,977 KB | FTF File | 09/09/200 |
| feat_HSV_lin-10x5x5-F.med | 1 KB | MED File | 09/09/200 |
| feat_HSV_lin-10x5x5-F.rds | 36,286 KB | RDS File | 09/09/200 |
| feat_tamuraS-2-A.ann | 29 KB | ANN File | 09/09/200 |
| feat_tamuraS-2-A.ftf | 73 KB | FTF File | 09/09/200 |
| feat_tamuraS-2-A.med | 1 KB | MED File | 09/09/200 |
| feat_tamuraS-2-A.rds | 36,284 KB | RDS File | 09/09/200 |
| feat_uniformity.ann | 10 KB | ANN File | 09/09/200 |
| feat_uniformity.ftf | 29 KB | FTF File | 09/09/200 |
| feat_uniformity.med | 1 KB | MED File | 09/09/200 |
| feat_uniformity.rds | 36,487 KB | RDS File | 09/09/200 |
| feat_variance-20-5.ann | 193 KB | ANN File | 09/09/200 |
| feat_variance-20-5.ftf | 553 KB | FTF File | 09/09/200 |
| feat_variance-20-5.med | 1 KB | MED File | 09/09/200 |
| feat_variance-20-5.rds | 35,831 KB | RDS File | 09/09/200 |
| hubs.txt | 1 KB | Text Document | 09/09/200 |
| image.lst | 138 KB | MASM Listing | 09/09/200 |
| neighs.lst | 25 KB | MASM Listing | 09/09/200 |
| neighs.txt | 25 KB | Text Document | 09/09/200 |
| Network.nnk | 1,541 KB | NNK File | 09/09/200 |

— 17

**Figure 4b**

---

**Figure 4c**

Window title: Image.lst - WordPad

File   Edit   View   Insert   Format   Help

🗋 🖼 🖫 🖶 🔍 ✂ ❘ 🖼 · 🖫

A2I/21CN/21CN_OC_Review_111004_Final/A0060_001a.jpg
A2I/21CN/21CN_OC_Review_111004_Final/A0060_002a.jpg
A2I/21CN/21CN_OC_Review_111004_Final/A0060_003a.jpg
A2I/21CN/21CN_OC_Review_111004_Final/A0060_004a.jpg
A2I/21CN/21CN_OC_Review_111004_Final/A0060_005a.jpg
A2I/21CN/21CN_OC_Review_111004_Final/A0060_006a.jpg
A2I/21CN/21CN_OC_Review_111004_Final/A0060_007a.jpg
A2I/21CN/21CN_OC_Review_111004_Final/A0060_008a.jpg
A2I/21CN/21CN_OC_Review_111004_Final/A0060_009a.jpg
A2I/21CN/21CN_OC_Review_111004_Final/A0060_010a.jpg
A2I/21CN/21CN_OC_Review_111004_Final/A0060_011a.jpg
A2I/21CN/21CN_OC_Review_111004_Final/A0060_012a.jpg
A2I/21CN/21CN_OC_Review_111004_Final/A0060_013a.jpg
A2I/21CN/21CN_OC_Review_111004_Final/A0060_014a.jpg
A2I/21CN/21CN_OC_Review_111004_Final/A0060_015a.jpg
A2I/21CN/21CN_OC_Review_111004_Final/A0060_016a.jpg
A2I/21CN/21CN_OC_Review_111004_Final/A0060_017a.jpg
A2I/21CN/21CN_OC_Review_111004_Final/A0060_018a.jpg
A2I/21CN/21CN_OC_Review_111004_Final/A0060_019a.jpg
A2I/21CN/21CN_OC_Review_111004_Final/A0060_020a.jpg
A2I/21CN/21CN_OC_Review_111004_Final/A0060_021a.jpg
A2I/21CN/21CN_OC_Review_111004_Final/A0060_022a.jpg
A2I/21CN/21CN_OC_Review_111004_Final/A0060_023a.jpg
A2I/21CN/21CN_OC_Review_111004_Final/A0060_024a.jpg
A2I/21CN/21CN_OC_Review_111004_Final/A0060_026a.jpg
A2I/21CN/21CN_OC_Review_111004_Final/A0060_027a.jpg
A2I/21CN/Copy_of_21CN_Slides_on_Matt_Bross_wall/A0080_001a.jpg
A2I/21CN/Copy_of_21CN_Slides_on_Matt_Bross_wall/A0080_002a.jpg
A2I/21CN/Copy_of_21CN_Slides_on_Matt_Bross_wall/A0080_003a.jpg
A2I/21CN/Copy_of_21CN_Slides_on_Matt_Bross_wall/A0080_004a.jpg
A2I/21CN/Copy_of_21CN_Slides_on_Matt_Bross_wall/A0080_005a.jpg
A2I/21CN/Copy_of_21CN_Slides_on_Matt_Bross_wall/A0080_006a.jpg
A2I/21CN/Copy_of_21CN_Slides_on_Matt_Bross_wall/A0080_007a.jpg
A2I/21CN/Copy_of_21CN_Slides_on_Matt_Bross_wall/A0080_008a.jpg
A2I/21CN/Copy_of_21CN_Slides_on_Matt_Bross_wall/A0080_009a.jpg
A2I/21CN/Copy_of_21CN_Slides_on_Matt_Bross_wall/A0080_010a.jpg
A2I/21CN/Pathfinder_OC_Briefing_28thNov_Issue1_3/A0100_001a.jpg
A2I/21CN/Pathfinder_OC_Briefing_28thNov_Issue1_3/A0100_002a.jpg
A2I/21CN/Pathfinder_OC_Briefing_28thNov_Issue1_3/A0100_003a.jpg
A2I/21CN/Pathfinder_OC_Briefing_28thNov_Issue1_3/A0100_004a.jpg
A2I/21CN/Pathfinder_OC_Briefing_28thNov_Issue1_3/A0100_005a.jpg
A2I/21CN/Pathfinder_OC_Briefing_28thNov_Issue1_3/A0100_006a.jpg
A2I/21CN/Pathfinder_OC_Briefing_28thNov_Issue1_3/A0100_007a.jpg
A2I/21CN/Pathfinder_OC_Briefing_28thNov_Issue1_3/A0100_008a.jpg
A2I/21CN/Pathfinder_OC_Briefing_28thNov_Issue1_3/A0100_009a.jpg
A2I/21CN/Pathfinder_OC_Briefing_28thNov_Issue1_3/A0100_010a.jpg
A2I/21CN/Pathfinder_OC_Briefing_28thNov_Issue1_3/A0100_011a.jpg
A2I/21CN/Pathfinder_OC_Briefing_28thNov_Issue1_3/A0100_012a.jpg

For Help, press F1

**Figure 4c**

Figure 5

EP 1 973 046 A1

Figure 6

Figure 7

**European Patent Office**

## EUROPEAN SEARCH REPORT

Application Number

EP 07 25 1244

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/145023 A1 (BENNETT CARL O [US] ET AL BENNETT JR CARL O [US] ET AL) 31 July 2003 (2003-07-31) <br> * paragraph [0004] * <br> * paragraph [0010] - paragraph [0011] * <br> * paragraph [0013] * <br> * paragraph [0023] * <br> * paragraph [0041] * <br> * paragraph [0048] * <br> * figure 7 * <br> ----- | 1-13 | INV. <br> G06F17/30 |
| Y,D | PAUL BROWNE ET AL: "iBase: Navigating Digital Library Collections" IMAGE AND VIDEO RETRIEVAL LECTURE NOTES IN COMPUTER SCIENCE;;LNCS, SPRINGER-VERLAG, BE, vol. 4071, 2006, pages 510-513, XP019036068 ISBN: 3-540-36018-2 * the whole document * <br> ----- | 1-13 | |
| Y | DANIEL HEESCH ET AL: "NNk Networks for Content-Based Image Retrieval" ADVANCES IN INFORMATION RETRIEVAL LECTURE NOTES IN COMPUTER SCIENCE;;LNCS, SPRINGER-VERLAG, BE, vol. 2997, 2004, pages 253-266, XP019004294 ISBN: 3-540-21382-1 * abstract * * page 256, paragraph 2 - page 258, last paragraph * <br> ----- | 1-13 | **TECHNICAL FIELDS SEARCHED (IPC)** <br><br> G06F |

The present search report has been drawn up for all claims

| Place of search | Date of completion of the search | Examiner |
|---|---|---|
| Munich | 31 August 2007 | Konak, Eyüp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 25 1244

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2007

| Patent document cited in search report | Publication date | Patent family member(s) | Publication date |
|---|---|---|---|
| US 2003145023 A1 | 31-07-2003 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Base: Navigating Digital Library Collections. **BROWNE ; RÜGER ; XU ; HEESCH.** International Conference on Image and Video Retrieval. Springer, July 2006, vol. 4071, 510-513
- **TAMURA et al.** Textural features corresponding to visual perception. *IEEE Transactions on Systems, Man and Cybernetics,* vol. 8 (6), 460-472
- **HOWARTH ; RUEGER.** Evaluation of texture features for content-based image retrieva. *International Conference on Image and Video Retrieval,* 2004
- **B.S. MANJUNATH ; J.R. OHM.** Color and texture descriptors. *IEEE Trans. on Circuits and Systems for Video Technology,* 2001, vol. 11, 703-715